# EUROPEAN PATENT APPLICATION

(11) **EP 4 467 716 A1**
(43) Date of publication of application: **27.11.2024**
(21) Application number: 24177249.0
(22) Date of filing: 22.05.2024
(51) Int. Cl.: D21H 17/02, C09D 7/63, D21H 19/10, D21H 19/44, D21H 19/82, D21H 19/84, D21H 21/16, D21J 1/08, D21J 5/00

(54) **A METHOD OF APPLYING A WOOD BARK DERIVED SUBSTANCE ON A SURFACE**

(30) Priority: 26.05.2023 FI 20235586
(71) Applicant: Metsä Board Oyj, 02020 Metsä (FI)
(72) Inventor: Talja, Riku, 02020 Metsä (FI); Saari, Terhi, 02020 Metsä (FI); Riuttanen, Riikka, 02020 Metsä (FI)
(74) Representative: Laine IP Oy

(57) **Abstract**

According to an example aspect of the present invention, there is provided a method comprising the steps of: applying a composition comprising a wood bark derived substance onto a surface of a fibrous substrate; and polymerising the wood bark derived substance on the surface.

## Description

### FIELD

The present invention belongs to the field of coatings. More specifically, it relates to the field of coatings of fibrous substrates.

### BACKGROUND

Fibrous products are coated to provide additional functionalities to the products. Such functionalities may include for example providing colour, providing a smooth surface to the product or reducing ink absorbency. One class of coatings are barrier coatings which for example may provide resistance to grease, moisture or oxygen.

Traditionally water-based barrier coatings are formulated using the pigment and petrochemistry based binders. Such applications are not desirable due to environmental factors. Petrochemistry based binders may be replaced by natural polymers in some occasions. However, the natural polymers are typically sensitive for moisture limiting their use in for example in food packaging applications. Therefore, new approaches for bio-based barrier coatings are still needed.

### SUMMARY OF THE INVENTION

The invention is defined by the features of the independent claims. Some specific embodiments are defined in the dependent claims.

According to a first aspect of the present invention, there is provided a method comprising the steps of: applying a composition comprising a wood bark derived substance onto a surface of a fibrous substrate; and polymerising the wood bark derived substance on the surface.

Various embodiments of the first aspect may comprise one or more features from the following bulleted list:
- The polymerising comprises a condensation reaction, such as a polycondensation reaction, or an esterification reaction of the wood bark derived substance.
- The polymerising comprises crosslinking.
- Said polymerising comprises a heat treatment, a corona treatment or a flame treatment.
- The temperature during the polymerising is in the range of 80 to 200 °C, preferably in the range of 120 to 180 °C, such as 140 to 170 °C.
- The method comprises, after said applying step, drying the surface, wherein said polymerising is carried out during the drying step.
- The wood bark derived substance is selected from suberin, betulin or combinations thereof.
- The wood bark derived substance comprises suberin extracted from birch bark.
- The composition comprises at least 5%, such as at least 15%, for example at least 30%, of the wood bark derived substance calculated from the dry-weight of the composition.
- The fibrous substrate is paper, paperboard, such as folding boxboard, foodservice paperboard, linerboard or corrugated boards, a wood-based board or a moulded pulp product.
- The composition further comprises a reagent that participates in the polymerising reaction.
- The reagent comprises an acid, preferably a carboxylic acid, such as a dicarboxylic acid.
- The reagent has at least two carboxyl groups.
- The reagent comprises or consists of citric acid, oxalic acid, sulfonic acid or oleic acid.
- The reagent comprises an alcohol.
- The amount of the reagent is less than 2%, such as less than 1%, of the total weight of the dry composition.
- The temperature during the polymerising step is in the range of 100 °C to 150 °C, such as in the range of 100 °C to 140 °C.
- The composition further comprises at least one pigment, such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylic, styrene-butadiene, acrylate copolymers, ethylacrylate, polyolefins, polyvinylacetate and polyvinylalcohol.
- The composition comprises less than 40%, such as less than 30%, for example less than 10%, of fibrous materials, such as cellulosic fibrous materials, calculated form the dry weight of the composition.
- The fibrous substrate has at least one coating layer on at least one of its surfaces, and said applying step comprises applying said composition on said coating layer.
- After said polymerising step, the method comprises applying a further coating layer on top of the polymerised wood-bark derived coating layer.
- Said applying step results in forming of a barrier coating layer on said fibrous substrate, wherein the barrier coating layer comprises the wood bark derived substance.
- Said polymerising step results in forming of a polymerised coating layer on said fibrous substrate, wherein the polymerised coating layer comprises a polymerised wood bark derived substance.

According to a second aspect of the present invention, there is provided a product obtained by the method according to the first aspect.

According to a third aspect of the present invention, there is provided a product comprising a fibrous substrate having on at least one of its surfaces an amount of a polymerised wood bark derived substance.

According to a fourth aspect of the present invention, there is provided use of the product according to the second aspect or the third aspect as or in packaging material.

### Advantages of the invention

An advantage of the present invention is that it discloses a barrier composition that may be formed completely from renewable components.

A further advantage of the present invention is that a fibrous substrate comprising the composition may have increased resistance to moisture and/or water vapour transmission.

A further advantage of the present invention is that the increased resistance to moisture is achieved even with a thin layer of the composition.

A further advantage of the present invention is that the wood bark derived substance is required only in small amounts for achieving the desired barrier effect.

A further advantage of the invention is that the composition may provide improved mechanical properties.

### BRIEF DESCRIPTION OF THE DRAWINGS

FIGURE 1 illustrates polymerization of suberin on a paper substrate. Solid line presents time point 5 minutes, dotted line presents time point 15 minutes and dashed line presents time point 30 minutes.
FIGURE 2 illustrates the effect of additional reagents during heat-treatment. Line present sample with suberin, dotted line presents sample with suberin and 0.7% citric acid and dashed line presents sample with suberin and 0.7% of oxalic acid.

### EMBODIMENTS

In the present context, the term "fiber" refers to a material form characterized by a high ratio of length to diameter.

In the present context, the term "cellulosic fiber" refers to fibers derived from plant tissue. The fibers may be non-wood fibers or wood-fibers. Generally, cellulosic fibers have a very broad range of diameters and length based on fiber type and source of fiber. The term cellulosic fiber may refer to wood pulp fibers but also to cellulose nanofibers, such as microfibrillar cellulose (MFC) or nanofibrillar cellulose (NFC). Cellulosic fibers may further refer to modified or recycled cellulosic fibers. Cellulosic fibers may further refer to lignocellulosic fibers.

In the present context, the term "barrier properties" refers to properties provided by a coating layer on a fibrous substrate. Such barrier properties may include for example oil resistance, grease resistance, moisture resistance, water vapour resistance, gas resistance, flavour resistance and/or oxygen resistance. The term "barrier effects" is used to describe the effects provided by the coating layer. Such barrier effects may include for example oil resistance, grease resistance, moisture resistance, water vapour resistance, gas resistance, flavour resistance and/or oxygen resistance.

The present invention is based on the finding that a composition comprising a wood bark derived substance may be polymerised after application of such composition on a fibrous substrate. Polymerised composition may exhibit good barrier properties, especially good moisture resistance and/or reduced water vapour transmission over the coated surface. In addition, the polymerized composition may provide good mechanical properties.

The present invention thus discloses a method comprising the steps of applying a composition comprising a wood bark derived substance onto the surface of a fibrous substrate and polymerising the wood bark derived substance on the surface. Polymerisation is preferably performed after the application step.

Polymerisation refers in the present context to any suitable method of linking two or more components of the wood bark derived substance together in order to form a polymer. The formed polymers may be chains of components or three-dimensional networks. In some embodiment, the components participating in the polymerisation reaction may be already polymers themselves. Characteristic for polymerisation is that the molecular weight of a component increases during polymerisation. In some examples, polymerisation may take place without participation of any additional chemicals added to the composition. In other embodiments, additional chemicals as reagents or catalysts may be needed. In both cases, the polymerisation reaction creates a network comprising the wood bark derived substance.

In some embodiments, polymerisation may comprise a condensation reaction or esterification reaction. Condensation reaction refers to a reaction in which two molecules are combined to form a single molecule, usually with a loss of a small molecule such as water. In some preferred examples, polycondensation reaction may take place. In polycondensation reaction, several condensation reactions take place creating a large chain or network of individual components. Esterification reaction refers to a chemical reaction producing at least one ester. An example of esterification reaction is the process of combining an organic acid (RCOOH) with an alcohol (ROH) to form an ester (RCOOR) and water. One possible component in the wood bark derived substance suitable for polymerisation is suberin. Polymerisation of suberin for example may occur upon ester bond formation between alcohol groups and carboxyl groups available in the suberin structure. Esterification of suberin results in a polymer network comprising at least two suberin molecules. In other embodiments, polymerising refers to crosslinking. Crosslinking refers to formation of a bond or a short sequence of bonds linking one component to another. Crosslinking may in some examples take place via structures already available in the components of the reaction. In other cases, crosslinking is achieved by introducing an external component to link the components together. Typically, the bonds formed in any of the above mentioned polymerisation reactions are covalent.

In some embodiments, said polymerisation may comprise a heat treatment, a corona treatment or a flame treatment. Any method suitable for heating a fibrous substrate may be applied. In some examples, heat treatment may be provided for example by using hot air, hot gas, contact heating or infrared heating. In some embodiments, chemical methods for heating the surface may be applied.

In some embodiments, temperature during the polymerisation step may range from 80 °C to 200 °C. In some preferred embodiments, the temperature may be in the range of 120 to 180 °C, such as 140 to 170 °C. At temperatures below 80 °C, the wood bark derived substance starts to melt but does not polymerise. It has been observed, that in some examples the polymerisation is enhanced at temperatures in the range of 150 - 200 °C, for example 160 - 190 °C. In other embodiments, the temperature during the polymerisation step may for example be in the range of 100 °C to 150 °C, such as in the range of 100 °C to 140 °C or in the range of 110 to 150 °C or 120 to 150 °C Preferably, the mentioned temperature is the temperature of the surface of the fibrous substrate.

In some embodiments, the surface is dried after applying the composition. In such cases, the polymerization step may be performed during the drying step. Suitable methods for drying the surface include for example infrared drying, air-drying, contact drying or combinations thereof. In some examples, drying methods are carried out at elevated temperatures providing a heating effect. Such heating effect may result in polymerisation of the wood bark derived substance.

In some examples, the polymerizing step takes less than 30 minutes, or at least 1 second. The polymerisation may take for examples less than 20 minutes, such as less than 10 minutes, less than 5 minutes, less than 3 minutes or less than 2 minutes. In some preferred embodiments, the polymerisation takes less 1 minute, such as less than 30 seconds or less than 10 seconds. Short polymerisation times are advantageous because they allow performing the polymerisation step inline during the production of the fibrous substrate.

In some embodiments, the wood bark derived substance is selected from the following group: suberin, betulin, their derivatives and any combinations thereof. In some preferred embodiments, the wood bark derived substance comprises of consists of wood bark extract.

In some embodiments, the wood bark derived substance comprises or consists of suberin and/or a derivative thereof. In some preferred embodiments, the wood bark derived substance comprises or consists of suberin extract. In some embodiments, the suberin extract may comprise small amounts of other wood bark derived substance, such as betulin. In some preferred embodiments, the wood bark derived substance may comprise or consist of suberin extracted from birch bark.

In some embodiments, the wood bark derived substance comprises or consists of betulin and/or a derivative thereof. In some preferred embodiment, the wood bark derived substance comprises or consists of betulin extract.

In some examples the wood-bark derived substance comprises less than 15 wt-% of betulin, such as less than 10 wt-% or less than 5 wt-% of betulin.

Suberin is a lipophilic macromolecule found in plant cell walls. It is a complex structure build from poly-functional long-chain fatty acids (suberin acids), glycerol and aromatic compounds such as hydroxycinnamic acid. Suberin acids include for example 18-hydroxyoctadec-9-enoic acid, 9,10-epoxy-18-hydroxyoctadecanoic acid, 20-hydroxyeicosanoic acid, 9,10,18-trihydroxyoctadecanoic acid and 22-hydroxydocosanoic acid. Suberin has many functional groups that may participate in polymerisation reactions. For example, suberin comprises alcohol-groups, carboxylic-groups and multiple double-bond structures, that may all participate in polymerisation. Typically, suberin is extracted from wood bark, for example from birch bark. Suberin can also be extracted for example from cork. The exact suberin composition varies. In some exemplary embodiments suberin fatty acid composition may contain 1.5 - 10.7% of 18-hydroxyoctadec-9-enoic acid, 50.6 - 80.7% of 9,10-epoxy-18-hydroxyoctadecanoic acid, 0.2 - 2.9% of 20-hydroxyeicosanoic acid, 0.6 - 6.8% of 9,10,18-trihydroxyoctadecanoic acid and 12.0 - 26.2% of 22-hydroxydocosanoic acid based on peak areas of suberin emulsion in GC-MS analysis. In some embodiments, extracted suberin may comprise other wood-derived substances, such as betulin, in small amounts in addition to suberin. Betulin is a triterpene having a pentacyclic ring structure. Betulin comprises alcohol-groups that may participate in polymerisation. Betulin can be extracted from certain wood barks, such as birch bark. Betulin amount may range for example from 0 to 15 weight percentage, such as below 10% or below 5%, of the dry weight of the suberin extract. In some embodiments, the suberin is in the form of a dispersion. The suberin content of the dispersion may be for example 50%, 80,%, 90% or 95% of the dry weight of the dispersion.

In some embodiments, the wood bark derived substance may be obtained, such as extracted, from bark of birch or cork oak.

The composition may comprise the wood bark derived substance in many different amounts. In some embodiments, the composition may comprise at least 10%, such as at least 15%, for example at least 30%, of the wood bark derived substance calculated from the dry weight of the composition. For example, the composition may comprise 50%, 70%, 80%, 90%, 95% or 100% of the wood bark derived substance. In some applications, extract comprising the wood bark derived substance may be used without any additional chemicals. It has been surprisingly been found, that suberin extract does not require additional chemicals in order to provide barrier effects. In these examples, the extract comprising the wood bark derived substance or suberin is typically in the form of a dispersion or emulsion. Preferably, the dispersion is an aqueous dispersion.

In other embodiments, the composition comprises the wood bark derived substance in an amount of at least 1%, such as at least 2%, at least 5%, at least 10%, at least 15% or at least 20%, of the dry weight of the composition. In such examples, the composition may additionally comprise for example pigments and/or binders. In these cases, the wood bark derived substance is only required in small quantities for gaining the desired barrier effects.

The method is flexible in terms of the form of the composition. In some embodiments, the composition may be in the form of a dispersion, an emulsion, a solution, a liquid, a paste or a wax. Preferably, the composition comprising the wood bark derived substance may be in the form of a dispersion, emulsion or a powder. In some embodiments, the composition comprising the wood bark derived substance may be in the form of a dispersion comprising 5 - 30%, such as 10 - 25%, for example 12 - 18% of the wood bark derived substance calculated from the dry matter of the dispersion. The dispersion may preferably be an aqueous dispersion. In other embodiments, the composition comprising the wood bark derived substance may be in the form of a powder.

The fibrous substrate may in some examples be paper, paperboard, such as folding boxboard, food service board, linerboard or corrugated boards, a wood-based board or a moulded pulp product. In some examples, the surface of the fibrous substrate is untreated and/or un-manipulated, such as uncoated, prior to application of the composition. In other examples, the surface of the fibrous substrate may be coated and/or embossed prior to the application of the composition comprising the wood bark derived substance. One or more additional coating layer(s) may in some examples be applied to the fibrous substrate before or after the application of the composition.

The composition may be applied onto the surface of the fibrous substrate by any technique suitable for such application. For example, the composition may be applied to the surface by spraying, rod coating, curtain coating, flexo printing, offset printing, surface sizing, foam coating or blade coating. In preferred embodiments, composition is applied by spraying or rod coating.

The inventors of the present disclosure have found that only a relatively thin layer of the composition is required for the desired barrier effect. In some embodiments, the amount of the composition may be less than 10 g/m², such as less than 8 g/m² or less than 6 g/m². In other embodiments, the amount of the composition may be in the range of 1 to 10 g/m², preferably in the range of 2 to 8 g/m². The amount of the composition may be for example less than 5 g/m² or less than 4 g/m². This is advantageous over typical barrier-coating layers that may be even 15 g/m². In some embodiments, the thickness of the coating ranges from 1 to 20 µm, such as from 2 to 16 µm, preferably from 3 to 10 µm. The thickness may be range for example from 4 to 18 µm or from 7 to 16 µm.

The method disclosed herein provides a fibrous substrate with improved barrier properties. One finding of the present disclosure is that the wood-bark derived component provides barrier effects. Particularly, the fibrous substrate according to the invention has an improved water vapour transmission rate (WVTR). In some embodiments, water vapour transmission rate of the fibrous substrate may be less than 500 g/m²/24 h at 38 °C and 90% relative humidity. WVTR may for example be less than 450 g/m²/24 or less than 400 g/m²/24 at 38 °C and 90% relative humidity. Such WVTR may be achieved with a dispersion coating consisting of the wood-bark derived component. In some embodiments, the fibrous substrate with WVTR less than 500 g/m²/24 h at 38 °C and 90% relative humidity may comprise further coating layers in addition to the barrier-coating layer.

Further, the mechanical properties of the fibrous substrate may be improved by using the disclosed method. In some embodiments, the coated fibrous substrate may be more resistant for damages due to for example bending, creasing, stretching or folding the fibrous substrate. Typically, such operations may create damages such as cracks, distortions, fractures, tears and/or ruptures to the fibrous substrate, particularly to the coated surface of the fibrous substrate. The method disclosed in the present disclosure may provide a coated surface resistant to such damages.

It is the observation of the present disclosure, that the polymerisation may be enhanced. Therefore, in some embodiments, the composition further comprises a reagent that participates to the polymerizing reaction. Such reagent may be any reagent suitable for enhancing condensation, esterification and/or crosslinking of the wood bark derived substance. In some embodiments, the reagent may comprise an acid, preferably a carboxylic acid, such as dicarboxylic acid. Acid may enhance for example the esterification of the wood bark derived substance. Acids may further act as catalysts. In some preferred embodiments, the reagent has at least two carboxyl-groups. Such compound may form a crosslink between two components in the wood bark derived substance. Therefore, acids with at least two carboxylic-groups may be advantageous for the polymerisation of the composition. Such acids may include for example dicarboxylic acids or tricarboxylic acids. Examples of suitable acids include citric acid, oxalic acid, sulfonic acid and oleic acid.

In other embodiments, the reagent may be an alcohol. Alcohols may participate for example to esterification. Alcohols may further act as catalysts. In some examples, the reagent has multiple hydroxyl-groups.

The amount of the reagent may vary. In preferred embodiments, the amount of the reagent is low when compared to the total weight of the sample. For example, the amount of the reagent may be less than 5%, for example less than 2%, such as less than 1% or less than 0.8%, of the total weight of the dry composition. In some examples, the amount of the reagent may range from 0.1 to 1%, such as from 0.2 to 0.7%, of the total weight of the dry composition.

In some examples, the presence of the reagent participating in the polymerisation reaction may lower the polymerisation temperature of the wood bark derived substance. The temperature during the polymerisation step may for example be in the range of 100 °C to 150 °C, such as in the range of 100 °C to 140 °C or in the range of 110 to 150 °C or 120 to 150 °C. Preferably, the mentioned temperature is the temperature of the surface of the fibrous substrate.

In some examples, the composition may comprise a carboxylic acid and the wood bark derived substance and the temperature during the polymerisation step may be in the range of 100 °C to 150 °C. In some examples, the temperature may be for examples in the range of 100 °C to 140 °C or in the range of 110 to 150 °C or 120 to 150 °C. In some preferred embodiments, the mentioned carboxylic acid comprises at least two carboxylic-groups. In other examples, the composition comprises citric acid or oxalic acid and the wood bark derived substance and the temperature during the polymerisation step is in the range of 100 °C to 150 °C, for examples in the range of 100 °C to 140 °C or in the range of 110 to 150 °C or 120 to 150 °C. In preferred embodiments, the composition may comprise oxalic acid and the wood bark derived substance and the polymerisation temperature is in the range of 120 to 150 °C.

In other preferred embodiments, the composition may comprise at least one pigment and/or at least one binder. For example, the composition may comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethyl acrylate, polyolefins, polyvinylacetate and polyvinylalcohol. Preferably, the binder may be selected from cellulose and cellulose derivatives, starch and starch derivatives, hemicellulose and hemicellulose derivatives.

In some examples the composition may comprise more than 20%, such as more than 30%, more than 40%, more than 50%, more than 60%, for example more than 70%, more than 80%, more than 85%, more than 90% or more than 95% of at least one pigment and/or at least one binder calculated from the dry weight of the composition. The above-mentioned amount may refer in some examples to the amount of either pigment or binder, or in other embodiments, the amount may refer to the combined amounts of both the pigment and the binder. The binder may be for example a biobinder. In some embodiments, the wood bark derived substance may be mixed with a pigment slurry or binder fraction prior to application onto the fibrous substrate. The composition comprising the wood bark derived substance may be in the form of a dispersion, emulsion or powder. For example, the composition may comprise or consist of 50 - 60% of at least one pigment, 30 - 40% of at least one binder and 5 - 15% of the wood bark derived substance. A composition comprising pigment and/or binder may be applied in some embodiments on a fibrous substrate comprising one or multiple additional coating layers. Additional coating layers may in some examples be applied on top of the composition comprising the wood bark derived substance.

In other embodiments, the composition may comprise less than 40% of fibrous materials, particularly cellulosic fibrous materials, calculated from the dry weight of the composition. In other embodiments, the composition may comprise less than 30%, such as less than 20% or less than 10%, for example less than 5%, of fibrous materials, calculated from the dry weight of the composition. In some embodiments, the composition does not comprise any fibers, particularly any cellulosic fibers. Fibers may provide additional strength to the composition when it is applied on the fibrous substrate. However, the composition disclosed in the present invention functions without the presence of fibers.

In some embodiments, the fibrous substrate may comprise at least one coating layer on at least one of its surfaces. In these examples, said applying step comprises applying said composition on said coating layer. Such coating layer may be for example a pre-coating, a further barrier coating, such as dispersion barrier coating, or a top-coating. For example, the coating layer may comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethyl acrylate, polyolefins, polyvinylacetate and polyvinylalcohol. In some examples, the coating may comprise around 60% of pigment and around 40% of binder, such as biobinder. The pigment/binder ratio may be for example 60/40. In other examples, the fibrous substrate may comprise multiple coating layers. For example, the fibrous substrate may comprise a pre-coating and a top-coating. In some embodiments, the pre-coating may be denser than the top-coating. In other embodiments, after said polymerising step, the method comprises applying a further coating layer on top of the polymerised composition comprising the wood bark derived substance.

In some embodiments, the said applying step may result in forming of a coating layer on said fibrous substrate. The coating layer may comprise the wood bark derived substance. In preferred embodiments, the said applying step may result in forming of a barrier coating layer on said fibrous substrate. The barrier coating layer may comprise the wood bark derived substance. In other embodiments, the polymerising step may result in formation of a polymerised coating layer on said fibrous substrate. The polymerised coating layer may comprise a polymerised wood bark derived substance. The polymerised coating layer may preferably be a barrier coating layer.

Another aspect of the invention is a fibrous product obtained by the method. The fibrous product may be for example paper, paperboard such as folding boxboard, food service board, linerboard or corrugated boards, a wood-based board or a moulded pulp product. Such fibrous product has improved barrier properties, particularly improved moisture resistance and/or lowered water vapour transmission. In addition, the surface of the fibrous product may have improved mechanical properties as explained above.

In some embodiments, the thickness of the polymerised composition layer ranges from 1 to 20 µm, such as from 2 to 16 µm, preferably from 3 to 10 µm. The thickness may range for example from 4 to 18 µm or from 7 to 16 µm. The term "polymerised composition layer" refers here to the layer of the composition comprising the wood bark derived substance that is formed when the composition is applied to a fibrous substrate with the above disclosed method.

Another aspect of the present disclosure is a product comprising a fibrous substrate having on at least one of its surfaces an amount of a polymerised wood bark derived substance. Such fibrous substrate may be produced with the method disclosed above. In some embodiments, the fibrous substrate may be paper, paperboard such as folding boxboard, food service board, linerboard or corrugated boards, a wood-based board or a moulded pulp product.

The present invention further discloses use of the product obtained with the above disclosed method as or in packaging material. In some embodiments, the packaging material is used in applications where good moisture resistance or low water vapour transmission rate is needed. Such applications may include for example materials for preparing, serving, storing or consuming food or cosmetics.

### Examples

### Example 1.

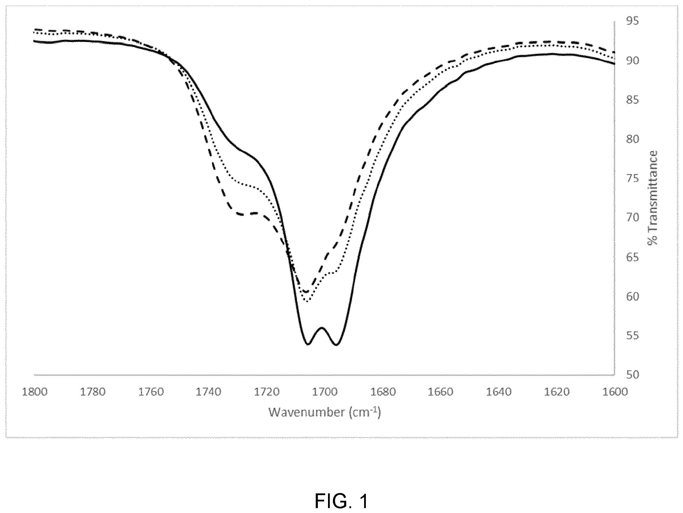

Paperboard was coated with suberin dispersion and analysed with Fourier transform infrared spectroscopy (FTIR). The samples were placed at 110 °C for 5 min, 15 min or 30 minutes before FTIR spectra was measured. During the heat-treatment ester groups were formed as indicated by the changes in wavenumber around 1730 cm⁻¹ (Fig. 1). Simultaneously the amount of acid groups decreased as indicated by the changes in wavenumber from 1695 to 1705 cm⁻¹ (Fig. 1). More ester groups were formed with longer reaction times.

### Example 2.

Sample 1: 10 g of aqueous suberin dispersion was dried at 50 °C over night.
Sample 2: 10 g of aqueous suberin dispersion was mixed with aqueous oxalic acid solution. The final oxalic acid amount was 0.7% calculated from the total weight of the solids. The solution was dried at 50 °C over night.

Samples were analysed using differential scanning calorimetry (DSC). The dynamic heating/cooling rate was set to 10 °C/minute. The samples were first cooled to -10 °C and then temperature raised to 250 °C. This cycle was repeated once. Results of the measurements are shown in Table 1.

**Table 1.**

| **Sample** | **Tₘ (°C)** | **Enthalpy of melting (J/g)** | **Tₑₓₒ (°C)** | **Enthalpy of exotherm Tₑₓₒ (J/g)** |
|---|---|---|---|---|
| **Sample 1** | 78.7 ± 0.4 | 96.8 ± 4.5 | 189.7 ± 0.6 | 51.7 ± 3.1 |
| **Sample 2** | 78.3 ± 0.2 | 93.6 ± 1.1 | 178.2 ± 0.3 | 43.9 ± 0.3 |

This experiment revealed that oxalic acid lowers the polymerization temperature (Tₑₓₒ) of suberin. The DSC measurements further revealed that polymerization was complete during the first heating cycle since no indication of melting or polymerization was observed in the second heating cycle for either of the samples.

### Example 3.

Sample 1: suberin dispersion. The sample was dried over night at 50 °C.
Sample 2: suberin dispersion was mixed with 0.7% of diluted citric acid solution calculated from the total weight of the solids. The sample was dried over night at 50 °C.
Sample 3: suberin dispersion was mixed with 0.7% diluted oxalic acid solution calculated from the total weight of the solids. The sample was dried over night at 50 °C.

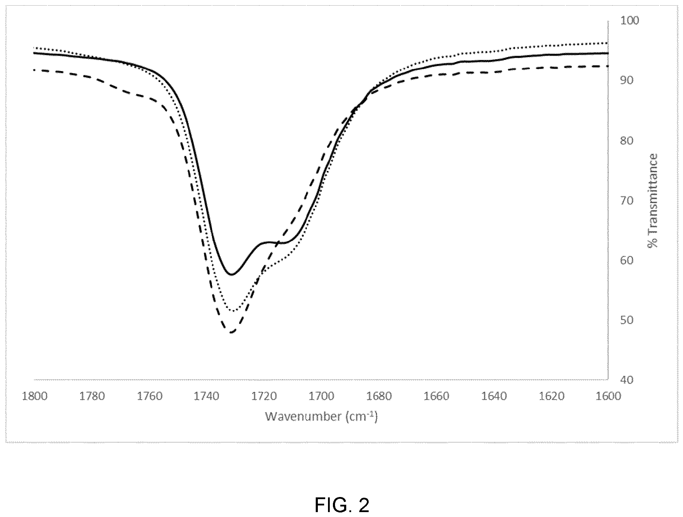

All samples were treated at 140 °C for 16 hours and analysed with Fourier transform infrared spectroscopy (FTIR) (Fig. 2). The results revealed that both acids enhance the esterification reaction compared to suberin without any additional acids. This can been observed in the disappearance of the peak representing acidic groups at wavenumber around 1710 cm⁻¹ and increase in the peak representing ester groups at wavenumber around 1730 cm⁻¹. The effect was stronger with oxalic acid.

### Example 4.

Sample 1: folded box board coated with bio-binder
Sample 2: folded box board coated with bio-binder and additionally coated with suberin dispersion.
Sample 3: folded box board coated with bio-binder and additionally coated with suberin dispersion containing 1% of oxalic acid calculated from the dry weight of the suberin dispersion.

Samples 2 and 3 were heat treated at 140 °C for 30 minutes.

Coating amount varied from 9 to 14 gsm across the samples.

Water vapour transmission rate (WVTR) was measured according to ISO 2528. Grease resistance was measured according to ASTM F119.

| **Sample #** | **Coating amount (g/m²)** | **WVTR 23 °C, 50% RH** | **WVTR 38 °C, 90% RH** |
|---|---|---|---|
| **1** | 9 | 46 | 930 |
| **2 before heat treatment** | 13.4 | 39 | 680 |
| **2 after heat treatment** | 7.7 | 29 | 580 |
| **3 before heat treatment** | 14.4 | 40 | 750 |
| **3 after heat treatment** | 5.3 | 29 | 550 |

The samples containing a suberin coating exhibit lowered WVTR compared to sample 1. Heat induced polymerisation of suberin further enhances the effect. Presence of acid did not reduce WVTR after heat-treatment.

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature and at relative humidity of 50% unless otherwise indicated. Unless otherwise indicated, room temperature is 23 °C.

As used herein, the term "about" refers to the actual given value, and also to an approximation to such given value that would reasonably be inferred to one of ordinary skill in the art, including approximations due to the experimental and/or measurement conditions for such given value.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. A method comprising the steps of:
- applying a composition comprising a wood bark derived substance onto a surface of a fibrous substrate; and
- polymerising the wood bark derived substance on the surface.

2. The method according to claim 1, wherein the polymerising comprises a condensation reaction, such as a polycondensation reaction, or an esterification reaction of the wood bark derived substance.

3. The method according to any of the preceding claims, wherein the polymerising comprises crosslinking, or wherein said polymerising comprises a heat treatment, a corona treatment or a flame treatment.

4. The method according to any of the preceding claims wherein the temperature during the polymerising is in the range of 80 to 200 °C, preferably in the range of 120 to 180 °C, such as 140 to 170 °C.

5. The method according to any of the preceding claims wherein the wood bark derived substance is selected from suberin, betulin or combinations thereof.

6. The method according to any of the preceding claims wherein the wood bark derived substance comprises suberin extracted from birch bark.

7. The method according to any of the preceding claims wherein the composition comprises at least 5%, such as at least 15%, for example at least 30%, of the wood bark derived substance calculated from the dry-weight of the composition.

8. The method according to any of the preceding claims wherein the fibrous substrate is paper, paperboard, such as folding boxboard, foodservice paperboard, linerboard or corrugated boards, a wood-based board or a moulded pulp product.

9. The method according to any of the preceding claims, wherein the composition further comprises citric acid, oxalic acid, sulfonic acid or oleic acid.

10. The method according to any of the preceding claims wherein the temperature during the polymerising step is in the range of 100 °C to 150 °C, such as in the range of 100 °C to 140 °C.

11. The method according to any of the preceding claims wherein the fibrous substrate has at least one coating layer on at least one of its surfaces, and said applying step comprises applying said composition on said coating layer.

12. The method according to any of the preceding claims, wherein, after said polymerising step, the method comprises applying a further coating layer on top of the polymerised wood-bark derived coating layer.

13. The method according to any of the preceding claims, wherein said applying step results in forming of a barrier coating layer on said fibrous substrate, wherein the barrier coating layer comprises the wood bark derived substance.

14. A product obtained by the method according to any of the preceding claims.

15. A product comprising a fibrous substrate having on at least one of its surfaces an amount of a polymerised wood bark derived substance.

16. Use of the product according to claim 14 or 15 as or in packaging material.
